# EUROPÄISCHE PATENTSCHRIFT

(11) **EP 2 445 604 B1**
(45) Veröffentlichungstag und Bekanntmachung des Hinweises auf die Patenterteilung: **22.03.2017**
(21) Anmeldenummer: 10723628.3
(22) Anmeldetag: 18.06.2010
(51) Int. Cl.: B01D 27/10, B01D 35/153, F01M 11/03

(54) **FILTEREINRICHTUNG**
FILTER DEVICE
DISPOSITIF DE FILTRATION

(30) Priorität: 24.06.2009 DE 102009030561; 16.02.2010 DE 102010008064
(43) Veröffentlichungstag der Anmeldung: 02.05.2012
(60) Teilanmeldung: 15163681.8
(73) Patentinhaber: Mahle International GmbH, 70376 Stuttgart (DE)
(72) Erfinder: HIRSCH, Markus, 38550 Isenbüttel (DE); STIFEL, Marco, 70178 Stuttgart (DE); YUAN, Zhang, Shanghai 200127 (CN)
(74) Vertreter: BRP Renaud & Partner mbB Rechtsanwälte Patentanwälte Steuerberater
(86) Internationale Anmeldenummer: PCT/EP2010/058618
(87) Internationale Veröffentlichungsnummer: WO 2010/149582

(56) Entgegenhaltungen:
- EP-A1- 1 949 950
- WO-A1-2009/083285
- DE-A1- 19 951 085
- DE-U1-202007 002 162
- DE-U1-202009 002 455

## Beschreibung

Die vorliegende Erfindung betrifft eine Filtereinrichtung für Flüssigkeiten, insbesondere ein Ölfilter zum Reinigen von Schmieröl für Verbrennungsmotoren von Kraftfahrzeugen, mit den Merkmalen des Oberbegriffs des Anspruchs 1.

Filtereinrichtungen, insbesondere Ölfilter für Verbrennungsmotoren von Kraftfahrzeugen, besitzen üblicherweise ein sogenanntes Ringfilterelement, mittels welchem eine die Filtereinrichtung durchströmende Flüssigkeit gefiltert wird. Turnusgemäß muss dieses Ringfilterelement ausgetauscht werden, um die Filterwirkung der Filtereinrichtung stets gewährleisten zu können. Das Ringfilterelement wird durch Abnahme einer Filtereinrichtung vom Gehäuse mit entfernt. Aufgrund der stetig steigenden Umweltauflagen muss dabei der Austausch des Ringfilterelementes möglich sein, ohne dass Flüssigkeit, insbesondere Öl, in die Umgebung gelangt. Aus diesem Grunde besitzen herkömmliche Filtereinrichtungen in ihrem Gehäuse neben einem Einlasskanal, der mit einer Rohseite des Ringfilterelementes kommuniziert und einem Auslasskanal der mit einer Reinseite des Ringfilterelementes kommuniziert, auch einen Leerlaufkanal, durch den ein Aufnahmeraum, in welchem das Ringfilterelement angeordnet ist, beim Abschrauben der Filtereinrichtung entleerbar ist. Selbstverständlich muss dieser Leerlaufkanal bei betriebsbereiter Filtereinrichtung verschlossen sein, da ansonsten die Reinseite und die Rohseite des Ringfilterelementes miteinander kurzgeschlossen werden würden und dadurch die Filtereinrichtung seine Filterwirkung nicht entfalten könnte.

Aus der DE 20 2007 002 162 U1 ist eine Filtereinrichtung mit einem Gehäusedeckel bekannt, in dem ein Stützrohr befestigt ist. Das Stützrohr ragt beim montierten Zustand der Filtereinrichtung in ein zugehöriges Gehäuse ein und verschießt einen Leerlaufkanal.

Die EP 1 949 950 A1 beschreibt eine gattungsgemäße Filtereinrichtung, die mit einem Zwischenstück zwischen einem Filtergehäusedeckel und einem Gehäuse ausgestattet ist, wobei das Zwischenstück einen Verschlussabschnitt aufweist, der einen Leelaufkanal im Gehäuse beim mit dem Gehäuse verschraubten Zustand des Filtergehäusedeckels verschließt.

Aus der WO 2009/083285 A1 ist eine Filtereinrichtung mit einem Filtergehäusedeckel, einem damit verschraubbaren Gehäuse und einem zwischen Gehäuse und Filtergehäusedeckel angeordneten Zwischenstück bekannt. Das Zwischenstück weist auf der dem Gehäuse zugewandten Seite ein abstehendes Verschließelement auf, das im verschraubten Zustand des Filtergehäusedeckels mit dem Gehäuse in einen gehäuseseitigen Leerlaufkanal hineinragt und somit verschließt.

Die vorliegende Erfindung beschäftigt sich mit dem Problem, für eine Filtereinrichtung eine verbesserte oder zumindest eine andere Ausführungsform anzugeben, welche ein automatisches Öffnen bzw. Verschließen eines Leerlaufkanales beim Aus- bzw. Einbau einer Filtereinrichtung ermöglicht.

Erfindungsgemäß wird dieses Problem durch den Gegenstand des unabhängigen Anspruchs gelöst. Vorteilhafte Ausführungsformen sind Gegenstand der abhängigen Ansprüche.

Die Erfindung beruht auf dem allgemeinen Gedanken, zwischen einer stehend angeordneten Filtereinrichtung und einem darunter angeordneten Gehäuse ein Zwischenstück vorzusehen, in welches eine Verschlusseinrichtung integriert ist. Die Verschlusseinrichtung ist dabei drehbar um die Filterachse des Ringfilterelementes ausgebildet, wobei das Ringfilterelement selbst in einem Aufnahmeraum angeordnet ist, welcher von einem Filtergehäusedeckel begrenzt ist. Gehäuseseitig sind ein Einlasskanal und ein Auslasskanal vorgesehen, wobei der Einlasskanal mit einer Rohseite des Ringfilterelementes und der Auslasskanal mit einer Reinseite des Ringfilterelementes kommuniziert. Ebenso in dem Gehäuse vorgesehen ist ein Leerlaufkanal, durch den der Aufnahmeraum beim Abschrauben der Filtereinrichtung entleerbar ist, so dass keine Filterflüssigkeit, insbesondere kein Öl, in die Umgebung gelangen kann. Die drehbar um die Filterachse angeordnete Verschlusseinrichtung weist ein Verschlusselement auf, mit welchem der Leerlaufkanal bei vollständig an das Gehäuse angeschraubter Filtereinrichtung verschließbar ist. Generell ist die Verschlusseinrichtung so ausgebildet, dass sie beim Anschrauben der Filtereinrichtung am Gehäuse in einer genau definierten Lage fixiert ist, in der das Verschlusselement fluchtend zum Leerlaufkanal angeordnet und durch das Anschrauben der Filtereinrichtung in eine den Leerlaufkanal verschließende Stellung verstellbar ist. Im Unterschied dazu wird die Verschlusseinrichtung beim Abschrauben der Filtereinrichtung vom Gehäuse verdreht und gleichzeitig axial vom Gehäuse weg bewegt, so dass das Verschlusselement beim Abschrauben der Filtereinrichtung vom Gehäuse den Leerlaufkanal freigibt und ein Leerlaufen des Zwischenstücks und gegebenenfalls des das Ringfilterelement beinhaltenden Aufnahmeraums ermöglicht. Durch die erfindungsgemäße Verschlusseinrichtung, welche beispielsweise als kostengünstiges Kunststoffteil mit einem Verschlusselement aus einem anderen Kunststoff ausgebildet sein kann, ist es auf technisch einfachste Weise möglich, den Leerlaufkanal bei vollständig am Gehäuse angeschraubter Filtereinrichtung zuverlässig zu verschließen und dadurch eine einwandfreie Funktion der Filtereinrichtung zu gewährleisten, wobei bei einem Abschrauben der Filtereinrichtung vom Gehäuse der Leerlaufkanal automatisch geöffnet wird, so dass der das Ringfilterelement enthaltende Aufnahmeraum leer laufen kann und keine Filterflüssigkeit in die Umgebung gelangt. Ein separates Öffnen bzw. Schließen des Leerlaufkanals, verbunden mit der Möglichkeit dieses zu vergessen, kann durch die erfindungsgemäße Filtereinrichtung zuverlässig ausgeschlossen werden, wodurch sich der Wartungsvorgang deutlich sicherer und zudem montagefreundlicher gestalten lässt. Durch die während des Anschraubvorgangs der Filtereinrichtung am Gehäuse genau fixierte Lage der Verschlusseinrichtung kann darüber hinaus ein aufwändiges Positionieren bzw. Ausrichten des Verschlusselementes bezüglich des zu verschließenden Leerlaufkanals entfallen, wobei stets gewährleistet ist, dass der Leerlaufkanaf bei vollständig am Gehäuse angeschraubter Filtereinrichtung zuverlässig verschlossen ist.

Erfindungsgemäß weist das Zwischenstück eine Kappe auf, während die Verschlusseinrichtung eine in der Kappe drehbar gelagerte Platte aufweist. Ferner weist die Platte einen durchbrochenen Seitenrand mit Öffnungen auf. Wird die Filtereinrichtung angeschraubt, so erfolgt eine Stauchung des Federelementes, wodurch eine Axialverstellung des Verschlusselementes hin zum Leerlaufkanal, verhindert wird, so dass das Verschlusselement auf einer Mündung des Leerlaufkanals aufliegt, und zwar so, dass der Leerlaufkanal dicht verschlossen ist.

Bei der Erfindung greift die Platte beim Anschrauben der Filtereinrichtung mit mindestens einer Rippe, die an mindestens einem Seitenteil der durchbrochenen Seitenwand angeordnet ist, an einer Rampe der Kappe an und ist durch ein weiteres Anschrauben der Filtereinrichtung in seine den Leerlaufkanal verschließende Stellung verstellbar.

Bei der Erfindung sind zwischen dem Zwischenstück und dem darüber angeordneten Ringfilterelement ein scheibenartiger Boden und ein einfaches Federelement vorgesehen, wobei der Boden mehrere in Umfangsrichtung verteilte Durchgangsöffnungen aufweist. Das Nichtmitdrehen der Verschlusseinrichtung beim Abschrauben des Filtergehäusedeckels vom Gehäuse bewirkt ein Anheben des Verschlusselementes und damit eine Axialverstellung der Verschlusseinrichtung samt Verschlusselement, so dass das Verschlusselement die Mündung des Leerlaufkanals freigibt. Die Verschlusseinrichtung verhält sich somit beim Anschraubvorgang bzw. Abschraubvorgang der Filtereinrichtung am/vom Gehäuse komplett anders.

Beim Anschrauben der Filtereinrichtung am Gehäuse wird dabei die Verschlusseinrichtung, das heißt die zwischen Verschlusseinrichtung und Boden angeordnete Feder gestaucht, bis das an der Verschlusseinrichtung angeordnete Verschlusselement dicht auf dem Leerlaufkanales anliegt. Dadurch kann beim Anschrauben der Filtereinrichtung am Gehäuse ein zuverlässiges Verschließen des Leerlaufkanales und beim Abschrauben der Filtereinrichtung vom Gehäuse ein zuverlässiges Öffnen und damit Leerlauf des Aufnahmeraums bewirkt werden. Diese gewährleistet zum einen eine hohe Funktionssicherheit der Filtereinrichtung und zum anderen kann ein Austritt von Filterflüssigkeit in die Umgebung zuverlässig vermieden werden, da der Leerlaufkanales vorzugsweise bereits bei wenigen Umdrehungen der Filtereinrichtung vollständig geöffnet wird, so dass der Aufnahmeraum vollständig leer laufen kann, bevor durch weitere Umdrehungen die Filtereinrichtung abgenommen ist.

Der Austritt von Flüssigkeit in die Umgebung kann zusätzlich durch eine äußere axial und radial wirkende Dichtungskombination verhindert werden, die die Verschlussfunktion der Filtereinrichtung gegenüber dem Gehäuse auch dann noch gewährleistet, wenn die Flachdichtung keinen Kontakt zu dem Gehäuse aufweist.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

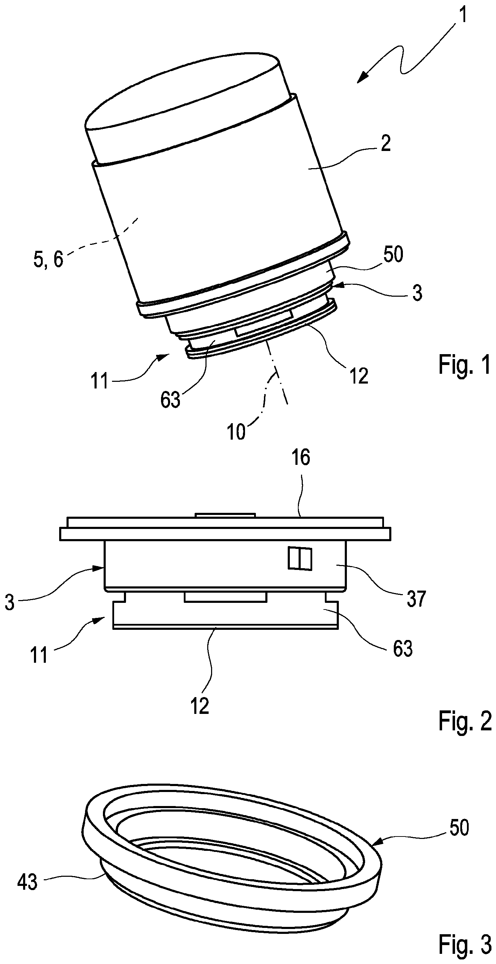

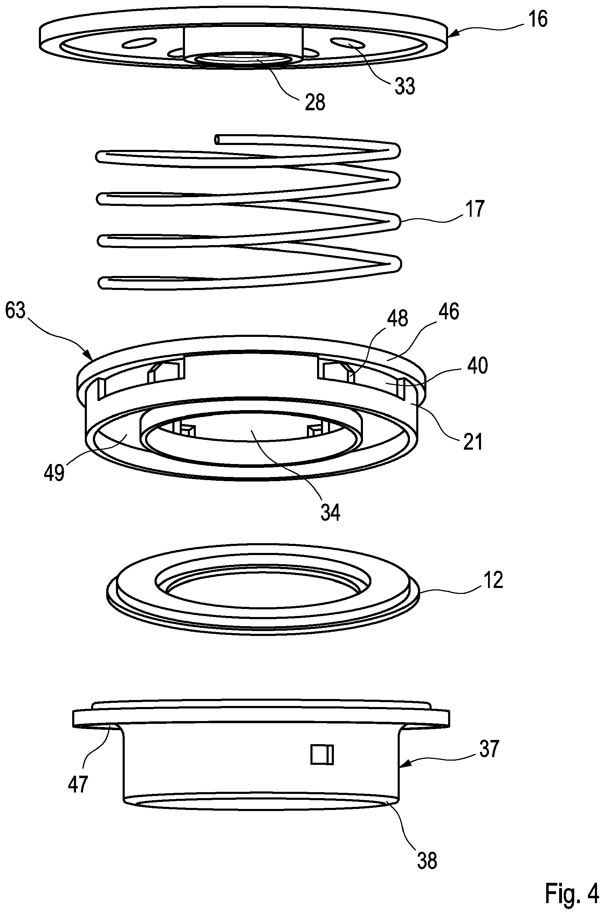

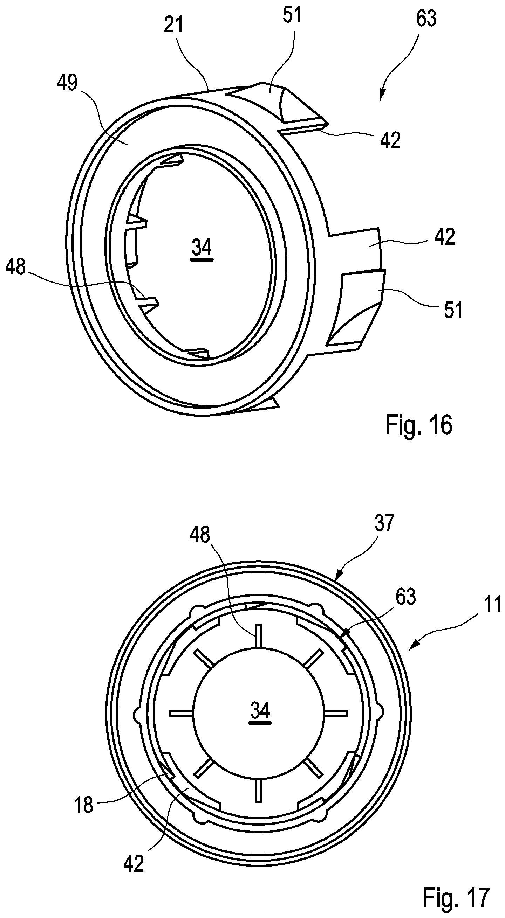

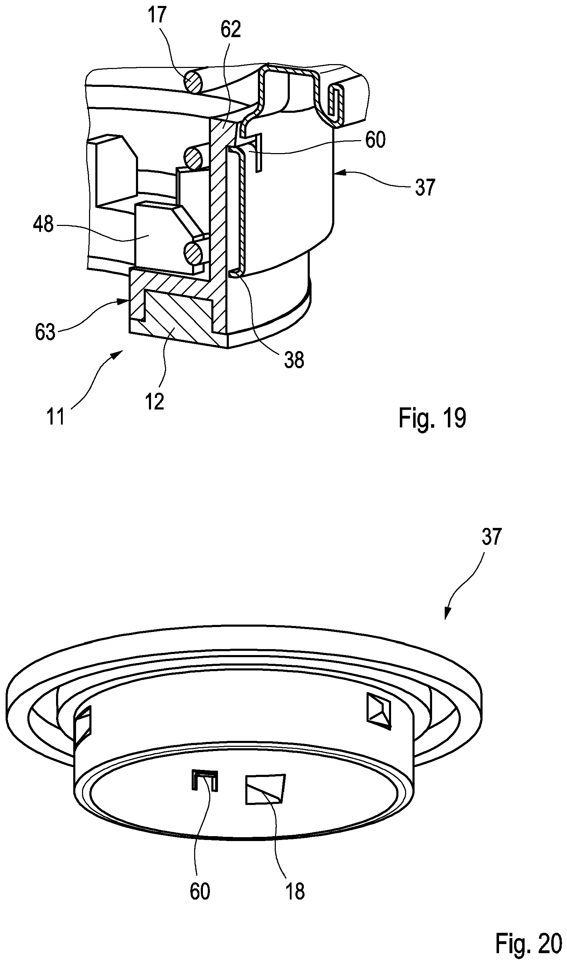

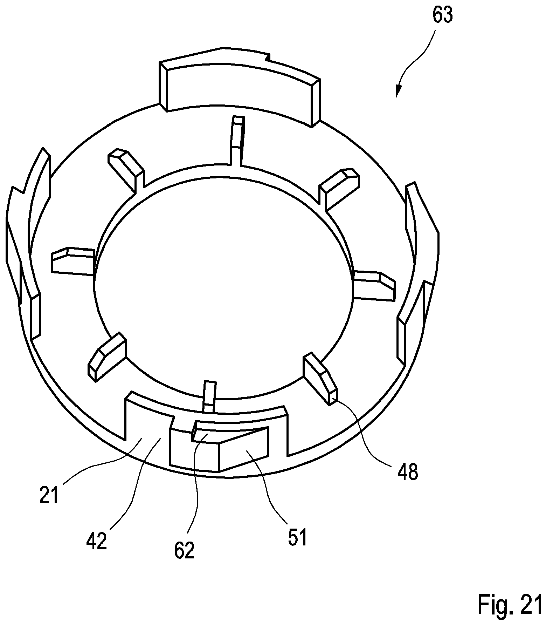

Bevorzugte Ausführungsbeispiele der Erfindung sind in den Zeichnungen der Figuren 1 bis 3, 5, 9 und 14 bis 21 dargestellt, während in den Figuren 4, 6 bis 8 und 10 bis 13 nicht erfindungsgemäße Ausführungsbeispiele gezeigt sind. Alle Ausführungsbeispiele werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,
- Fig. 1: zeigt eine Außenansicht der erfindungsgemäßen Filtereinrichtung
- Fig. 2: zeigt ein Detail der Außenansicht
- Fig. 3: zeigt die äußere Dichtung
- Fig. 4: zeigt das Detail als Explosionsdarstellung
- Fig. 5: zeigt ein Detail in der Draufsicht von oben
- Fig. 6: zeigt die Platte in zwei Ansichten a) und b)
- Fig. 7: zeigt einen Schnitt durch das untere Ende der Filtereinrichtung
- Fig. 8: zeigt die Kappe und die Platte zusammen
- Fig. 9: zeigt das Gehäuse
- Fig. 10: zeigt einen Schnitt durch die Filtereinrichtung beim Anschrauben an das Gehäuse
- Fig. 11: zeigt einen Schnitt durch die Filtereinrichtung im angeschraubt Zustand
- Fig. 12: zeigt einen Schnitt durch die Filtereinrichtung beim Abschrauben vom dem Gehäuse
- Fig. 13: zeigt ein Detail aus Fig. 11
- Fig. 14: zeigt eine alternative Ausführungsform
- Fig. 15: zeigt einen Ausschnitt der Platte aus Fig. 14
- Fig. 16: zeigt eine Ansicht der Platte aus Fig. 14 von unten
- Fig. 17: zeigt eine Ansicht der Platte aus Fig. 14 mit Kappe
- Fig. 18: zeigt eine weitere alternative Ausführungsform in der Explosionsdarstellung
- Fig. 19: zeigt das untere Ende der Filtereinrichtung zur weiteren Ausführungsform
- Fig. 20: zeigt die Kappe der weiteren Ausführungsform
- Fig. 21: zeigt die Platte der weiteren Ausführungsform.

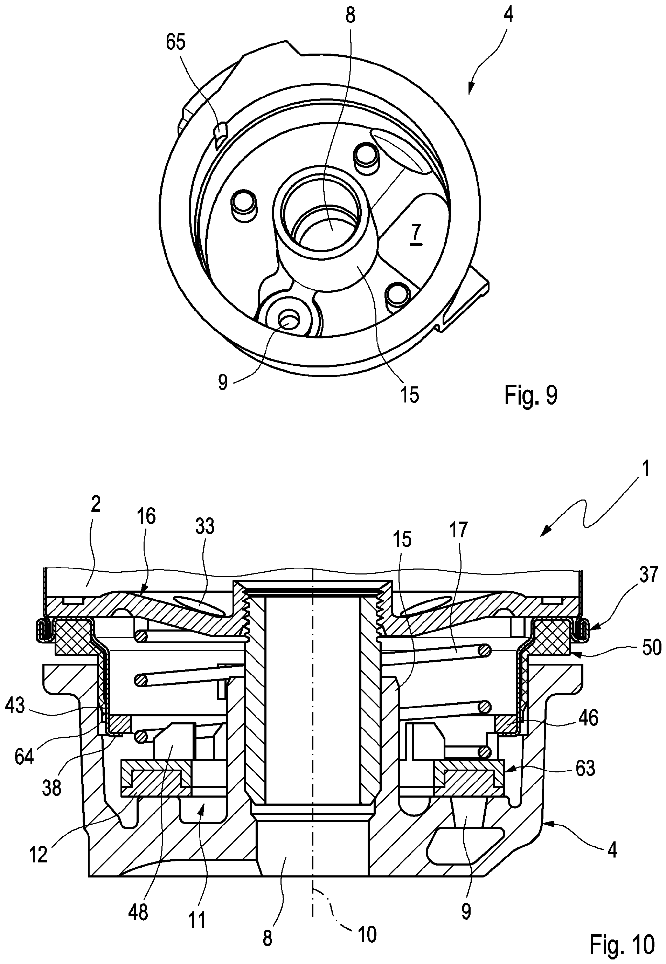

In Fig. 1 ist die Filtereinrichtung 1 von außen zusehen. Sie besteht aus einem Filtergehäusedeckel 2, dieser bildet in seinem Inneren einen Aufnahmeraum 5 in dem das Ringfilterelement 6 so angeordnet ist, dass es eine Reinseite von einer Rohseite trennt. Der innere Aufbau ist der eines üblicherweise verwendeten Wechselfilters der zur Filtrierung von Öl geeignet ist. An der dem Gehäuse 4 zugewandten Seite der Filtereinrichtung 1 befindet sich ein Zwischenstück 3. Das Gehäuse 4 an dem die Filtereinrichtung 1 festgeschraubt wird kann beispielsweise ein Motorblockgehäuse oder ein Zylindergehäuse sein. Der Einfachheit halber wird nur von Gehäuse 4 gesprochen. Das Gehäuse 4 ist so gestaltet, dass es einen Dom 15 mit Gewinde, sowie den Einlasskanal 7, den Auslasskanal 8 und den Leerlaufkanal 9 aufweist (siehe Fig. 9).

In der Fig. 2 ist das Zwischenstück 3 gezeigt, das mit dem Filtergehäusedeckel 2 an dem Übergang der beiden Teile dicht verbördelt ist. Das Zwischenstück 3 besteht aus einer äußeren Kappe 37 und einer innenliegenden Platte 63.

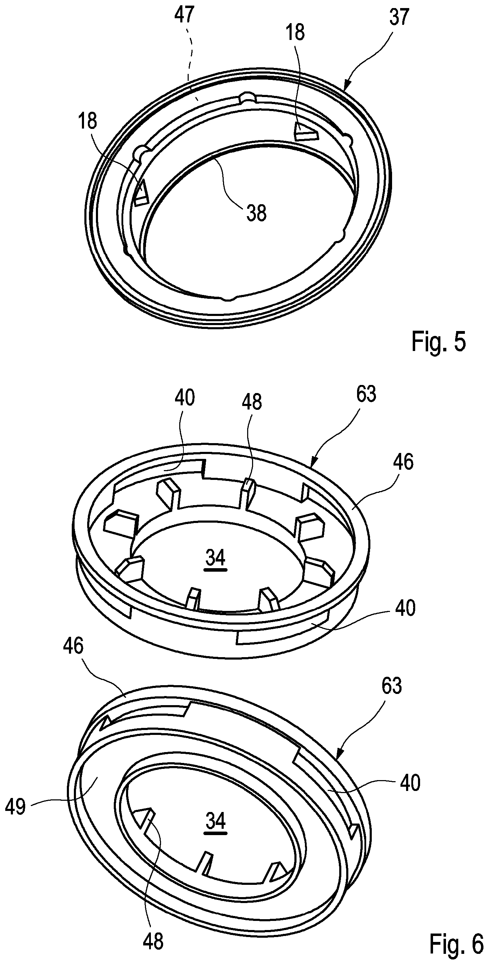

In der Fig. 3 ist die außen um die Kappe 37 anliegende Dichtung 50 gezeigt die in Richtung des Gehäuses 4 eine an der Kappe 37 außen anliegende Lippe 43 mit radialer Dichtwirkung aufweist. Diese Dichtung 50 dichtet im Allgemeinen die Filtereinrichtung 1 gegenüber der Umgebung ab, so dass während des Betriebes des Fahrzeuges und beim Abschrauben der Filtereinrichtung kein Öl in die Umgebung gelangen kann. Zur Aufnahme der Dichtung 50 ist in der Kappe 37 im Bereich der Verbindung zwischen Filtergehäusedeckel 2 und Kappe 37 eine in Axialrichtung offen Ringnut 47 vorgesehen (siehe Fig. 5)

In der Fig. 4 sind die einzelnen Teile, die zusammen das Zwischenstück 3 bilden und weitere Teile dargestellt. Den Abschluss des Aufnahmeraumes 5 bildet ein Boden 16, der Durchgangsöffnungen 33 aufweist durch die Öl in den Aufnahmeraum 5 gelangen kann. Die zentrale Öffnung 34 weist ein Gewinde oder einen Gewindehohlbolzen auf damit die Filtereinrichtung 1 an dem Dom 15 des Gehäuses 4 festgeschraubt werden kann. Zwischen Boden 16 und Platte 63 befindet sich ein Federelement 17, in dem gezeigten Beispiel eine gewöhnliche Spiralfeder, es kann aber jedes geeignete Federelement 17 verwendet werden. Das Federelement 17 hat an der Platte 63 innen eine Auflagefläche. Die Platte 63 weist eine zentrale Öffnung 34 und einen seitlichen Rand 21 auf, der von Öffnungen 40 durchbrochen wird. Die Öffnungen 40 werden an ihrem oberen Ende durch einen Verbindungssteg 46 verbunden, der in Radialrichtung etwas übersteht und so einen Anschlag für die Platte 63 bildet. Dieser Anschlag bildet gleichzeitig die Halterung der Platte 63 in der Kappe 37. Die Kappe 37 hat zu diesem Zweck am unteren Ende einen umgebogenen Rand 38. Die Platte 63 weist auch an der dem Gehäuse zugewandten Seite eine flache Ringnut 49 auf, in die das Verschlusselement 12 in Form einer flachen O-Ring Dichtung eingelegt ist. Die Dichtmasse kann auch in die Ringnut 49 eingespritzt sein. Die genaue Form des Verschlusselementes 12 ist vom jeweiligen Anwendungsfall abhängig.

Alle genannten Teile der Filtereinrichtung 1, bis auf das Ringfilterelement 6 und die Dichtungen können aus Metall oder auch aus geeigneten Kunststoffen hergestellt sein, in letzterem Fall wäre dann allerdings die Kappe 37 mit dem Filtergehäusedeckel 2 nicht verbördelt, sondern verschweißt.

Im Detail sind die Kappe 37 und die Platte 63 nochmals in den Fig. 5 und 6 dargestellt. In der Kappe 37 befindet sich mindestens eine Vorsprung 18. Die Platte 63 ist beliebig drehbar in der Kappe 37 gelagert. In der Platte 63 auf der Innenseite ist mindestens Begrenzungsnoppe 48 angeordnet, die das Federelement 17 an seinem Platz halten.

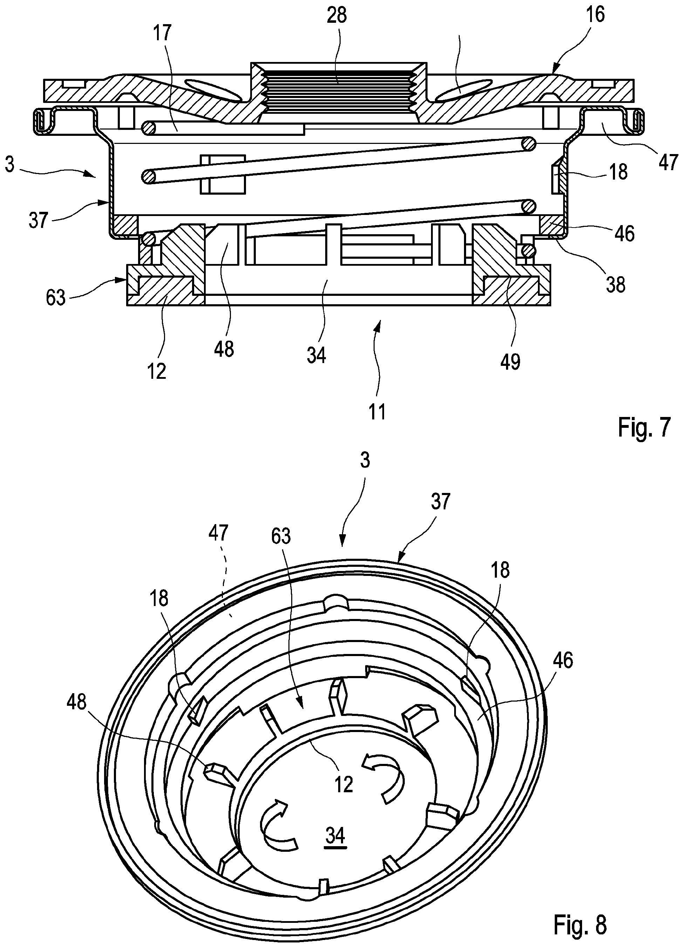

Fig. 7 zeigt einen Schnitt durch das untere Ende der Filtereinrichtung 1. Zu sehen ist hier wie es aufgebaut ist. Die Vorsprünge 18 bilden in diesem Ausführungsbeispiel einen oberen Anschlag für die Platte 63, so dass die Platte 63 nicht in die Kappe 37 hineingedrückt werden kann.

In der Fig. 8 ist eine schräge Draufsicht auf die Platte 63 die drehbar in der Kappe 37 gelagert ist zu sehen. Die Platte ist wie die beiden Pfeile andeuten in beide Drehrichtungen frei beweglich.

In der Fig. 9 ist eine Schrägaufsicht auf das Gehäuse 4 zu sehen. Man erkennt den Einlasskanal 7, den Auslasskanal 8 und die Leerlauföffnung 9.

In Fig. 9 ist eine Belüftungsöffnung mit 65 bezeichnet, durch die beim Abschrauben des Deckels 2 Luft von außen in den Aufnahmeraum 5 eintreten aber kein Öl austreten kann.

In der Fig. 10 ist das Gehäuse 4 mit Filtereinrichtung 1 während des Anschraubens geschnitten dargestellt. Die Platte 63 kann beim Anschrauben mitgedreht werden, da sie in der Kappe 37 drehbar gelagert ist. Die Platte 63 kann aber auch nur axial bewegt werden, während die Filtereinrichtung 1 angeschraubt wird. Wenn das Verschlusselement 12 auf der Öffnung des Leerlaufkanals 9 zu liegen kommt, dreht sich die Platte 63 nicht mehr weiter mit der Filtereinrichtung 1 mit. Die Filtereinrichtung 1 wird solange weiter festgeschraubt bis auch die Dichtung 50 zur Anlage am Gehäuse 4 kommt, währenddessen ruht die Platte 63. Auf diese Weise wird vermieden, dass die Dichtung 12 über die Öffnung des Leerlaufkanals 9 reibt. Die an die Dichtung 50 angeformte Lippe 43 liegt nun an der Innenwand der Aufnahme des Gehäuses 4 an und dichtet die Filtereinrichtung gegenüber der Umgebung ab.

Gemäß Fig. 10 kann die Dichtung 50 einen, insbesondere zylindrischen, Fortsatz 43 oder Abschnitt 43 aufweisen, der axial in einen Ringraum 64 hineinragt, der zwischen dem Zwischenstück 3 bzw. der Kappe 37 und dem Gehäuse 4 entsteht, wenn der Deckel 2 aufgeschraubt ist, wobei der Fortsatz 43 beim Abschrauben des Deckels 2 auch dann noch radial dichtet, wenn die axiale Dichtung des Dichtelements 50 durch Abheben vom Gehäuse 4 aufgehoben ist.

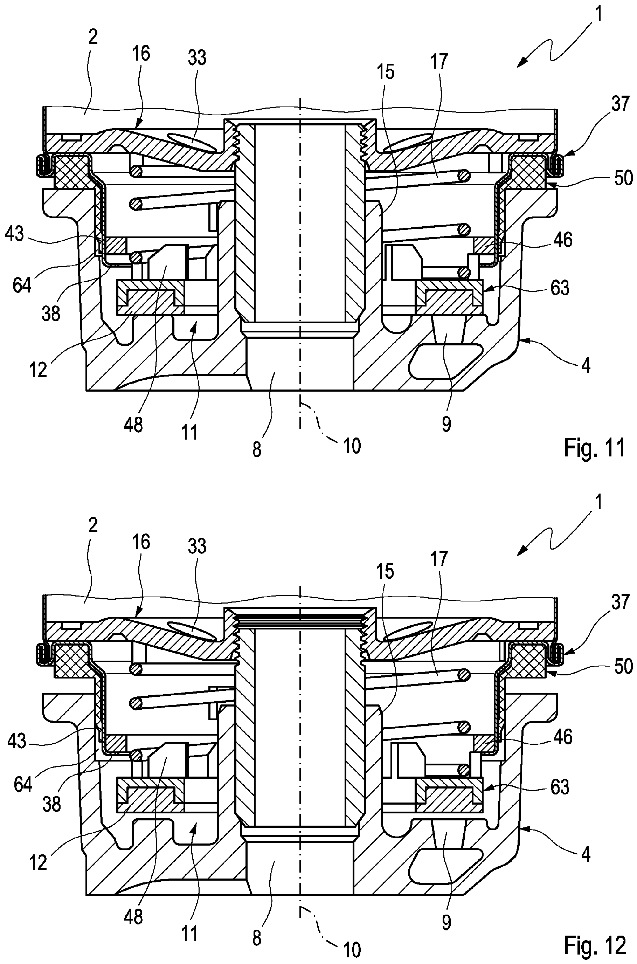

In der Fig. 11 ist die Filtereinrichtung im angeschraubten Zustand gezeigt. Durch das Festschrauben wird der Verbindungssteg 46 der Platte 63 von dem umgebogenen Rand 38 der Kappe 37 abgehoben. Das Federelement 17 drückt das Verschlusselement 12 auf die Öffnung des Leerlaufkanales 9.

Beim Abschrauben der Filtereinrichtung 1 vom Gehäuse 4 wird die Platte 63 nicht mit der Filtereinrichtung 1 mitbewegt, weil sie drehbar in der Kappe 37 gelagert ist. Nach ein bis zwei Drehungen der Filtereinrichtung nimmt der Rand 38 der Kappe 37 den Verbindungssteg 46 der Platte 63 wieder mit, sodass die Leerlauföffnung des Leerlaufkanales 9 freigegeben wird und das Öl aus dem Aufnahmeraum 5 der Filtereinrichtung 1 über den Leerlaufkanal 9 abfließen kann bevor die Filtereinrichtung 1 vom Gehäuse losgeschraubt ist.

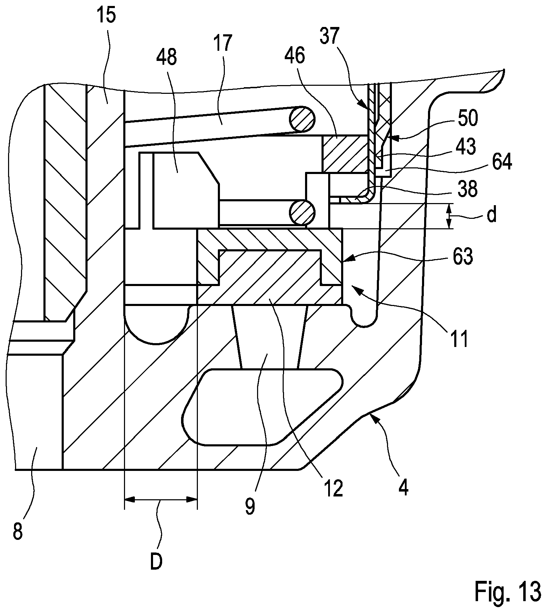

In der Fig. 13 ist ein Detail der Fig. 11 zu sehen, wo die Filtereinrichtung 1 fest an dem Gehäuse 4 angeschraubt ist. Die Abstände d und D bestimmen den Druckverlust des Öl beim Durchströmen der Filtereinrichtung 1 im Betrieb.

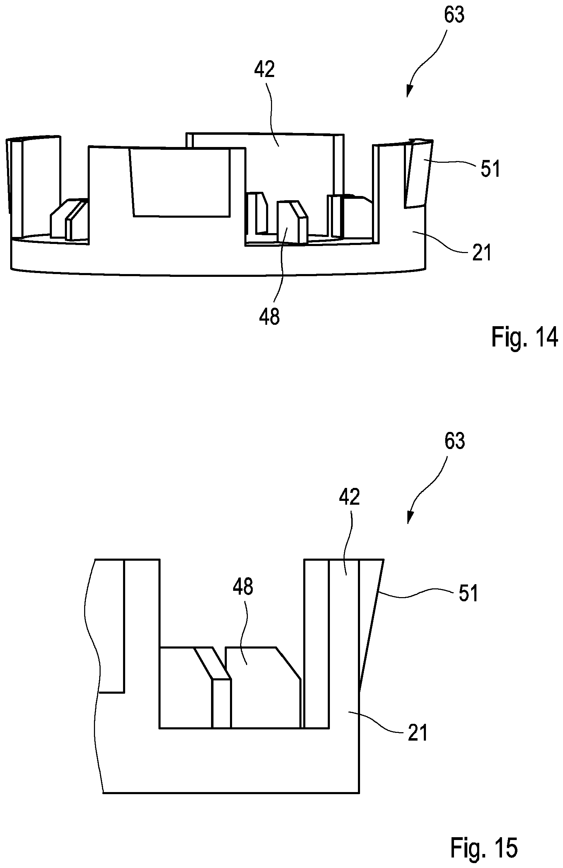

In den Fig. 14 bis 17 ist eine alternative Ausführungsform zu sehen. Hier ist ebenfalls die Seitenwand 21 der Platte 63 durchbrochen. Auf mindestens einem Teilstück 42 der Seitenwand 21 befindet sich eine Rampe 51. Auf der einen Seite weist die Rampe 51 eine stetig ansteigende Fläche auf, auf der anderen Seite eine gerade Kante, die auf dem Umfang der Seitenwand 21 senkrecht steht.

Diese Rampen 51 wirken mit den Vorsprüngen 18 der Kappe 37 zusammen, in der Form, dass durch die Kante der Rampen 51 die Mitnahme der Platte 63 beim Abschrauben der Filtereinrichtung 1 gewährleistet wird. Durch die Rampensteigung wird die Federkraft des Federelementes 17 überwunden. Dabei wird die Platte 63 axial unabhängig von der Gewindesteigung angehoben. Beim Abschrauben der Filtereinrichtung 1 wird die Leerlauföffnung des Leerlaufkanales 9 freigegeben, so dass das Öl aus dem Aufnahmeraum 5 abfließen kann, bevor die Dichtung 50 axial die Berührungsfläche des Gehäuses 4 verlassen hat, also deutlich bevor die Filtereinrichtung 1 vollständig vom Gehäuse 4 abgeschraubt ist.

Beim Anschrauben der Filtereinrichtung 1 ist die Platte 63 in der Kappe 37 bedingt drehbar gelagert. Wenn das Verschlusselement 12 auf der Leerlauföffnung des Leerlaufkanals 9 aufsetzt, bewegt sich die Platte 63 nicht mehr axial und sie rotiert auch nicht mehr mit der Filtereinrichtung 1 mit.

Die Filtereinrichtung 1 wird dann noch fest auf das Gehäuse aufgeschraubt. Dadurch gibt es keine Reibung des Verschlusselementes 12 an der Leerlauföffnung. Die Leerlauföffnung des Leerlaufkanales 9 wird durch die Federkraft des Federelementes 17, die das Verschlusselement 12 auf das Gehäuse 4 drückt, dicht verschlossen. Der Rand 38 der Kappe 37 liegt an geeigneter Stelle an dem Außenumfang der Platte 63 an, damit die Platte 63 nicht bei der Montage der Filtereinrichtung 1 aus der Kappe 37 herausfällt.

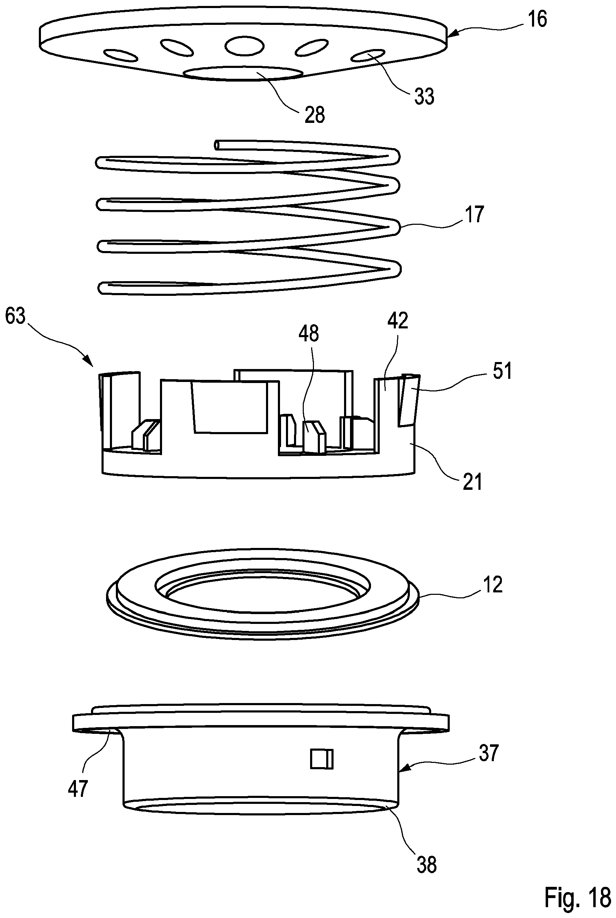

In den Fig. 18 bis 21 ist eine weitere Ausführungsform dargestellt. Hierbei weisen die Seitenteile 42 des durchbrochenen Seitenrandes 21 der Platte 63 einen Vorsprung 62 auf, an dem ein umgebogener Vorsprung 60 der Kappe 37 anliegt und zwar derart, dass die Platte 63 nicht wieder versehentlich auf die Öffnung des Leerlaufkanales gedrückt wird. Dieser umgebogene Vorsprung 60, 62 kommt auch zum Tragen, wenn die Platte 63 im Vergleich zur Kappe 37 gedreht wird, sich nicht mit der Filtereinrichtung mitbewegt, dann liegt der Vorsprung 61, 62 auf dem umgebogenen Rand 38 der Kappe 37 auf und verhindert an dieser Position das Absinken der Platte 63 auf den Leerlaufkanal. Beim Abschrauben des Filtergehäusedeckels 2 wirken wieder die Rampen 51 zusammen mit den Vorsprüngen 18 in der Kappe 37 und überwinden so die Federkraft des Federelementes 17 so dass die Leerlauföffnung des Leerlaufkanales 9 freigegeben wird, bevor die Dichtung 50 axial die Berührungsfläche des Gehäuses 4 verlassen hat und die Filtereinrichtung 1 komplett abgeschraubt ist. Die Anzahl der Vorsprünge 60, 61, 62 ist beliebig wählbar.

Beim Anschrauben des Filtergehäusedeckels 2 verhält sich diese Ausführungsform wie die beiden anderen Ausführungsformen.

## Patentansprüche

1. Filtereinrichtung (1), insbesondere ein Ölfilter zum Reinigen von Schmieröl für Verbrennungsmotoren von Kraftfahrzeugen,
- mit einem, einen Aufnahmeraum (5) begrenzenden Filtergehäusedeckel (2), in dem ein Ringfilterelement (6) angeordnet ist,
- mit einem Gehäuse (4), in welchem mittig ein Dom (15) angeordnet ist und auf welches der Filtergehäusedeckel (2) aufschraubbar ist,
- mit wenigstens einem Zwischenstück (3), welches bei am Gehäuse (4) angeschraubtem Filtergehäusedeckel (2) zwischen Filtergehäusedeckel (2) und Gehäuse (4) angeordnet ist,
- mit einem gehäuseseitigen Einlasskanal (7), der mit einer Rohseite des Ringfilterelementes (6) kommuniziert und einem gehäuseseitigen Auslasskanal (8), der mit einer Reinseite des Ringfilterelementes (6) kommuniziert,
- mit einem gehäuseseitigen Leerlaufkanal (9), durch den der Aufnahmeraum (5) beim Entfernen des Filtergehäusedeckels (2) entleerbar ist,
- wobei das Zwischenstück (3) eine um die Filterachse (10) drehbar angeordnette Verschlusseinrichtung (11) aufweist, die ein Verschlusselement (12) aufweist, mit welchem der Leerlaufkanal (9) verschließbar ist,
- wobei die Verschlusseinrichtung (11) so ausgebildet ist, dass sie beim Anschrauben des Filtergehäusedeckels (2) am Gehäuse (4) in einer genau definierten Lage fixiert ist, in welcher das Verschlusselement (12) fluchtend zum Leerlaufkanal (9) angeordnet und durch das Anschrauben des Filtergehäusedeckels (2) in eine den Leerlaufkanal (9) verschließende Stellung verstellbar ist, während die Verschlusseinrichtung (11) beim Abschrauben des Filtergehäusedeckels (2) verdreht und gleichzeitig axial von dem Gehäuse (4) wegbewegt wird, so dass das Verschlusselement (12) den Leerlaufkanal (9) freigibt,
- wobei zwischen dem Zwischenstück (3) und dem Ringfilterelement (6) ein scheibenartiger Boden (16) vorgesehen ist, welcher mehrere in Umfangsrichtung verteilte Durchgangsöffnungen (33) aufweist,
**dadurch gekennzeichnet,**
- **dass** das Zwischenstück (3) eine Kappe (37) aufweist,
- **dass** die Verschlusseinrichtung (11) eine in der Kappe (37) drehbar gelagerte Platte (63) aufweist,
- **dass** die Platte (63) eine durchbrochene Seitenwand (21) mit Öffnungen (40) aufweist,
- **dass** zwischen der Platte (63) der Verschlusseinrichtung (11) und dem scheibenartigen Boden (16) ein Federelement (17) angeordnet ist, das bewirkt, dass das Verschlusselement (12) auf die Leerlauföffnung (9) gedrückt wird,
- **dass** die Verschlusseinrichtung (11) oder deren Platte (63) beim Anschrauben des Filtergehäusedeckels (2) mit mindestens einer Rippe (51), die an mindestens einem Seitenteil (42) der durchbrochenen Seitenwand (21) der Platte (63) angeordnet ist, an einer Rampe (18) der Kappe (37) angreift und durch ein weiteres Anschrauben des Filtergehäusedeckels (2) in ihre den Leerlaufkanal (9) verschließende Stellung verstellbar ist.

2. Filtereinrichtung nach Anspruch 1,
**dadurch gekennzeichnet,**
**dass** die Drehbewegung der Verschlusseinrichtung (11) eine Axialverstellung der Verschlusseinrichtung (11) und damit ein Öffnen des Leerlaufkanals (9) bewirkt.

3. Filtereinrichtung nach Anspruch 1 oder 2,
**dadurch gekennzeichnet,**
**dass** ein das Verschlusselement (12) aufweisender Körper, insbesondere die Platte (63) aus Kunststoff oder aus Metall, insbesondere aus Blech, ausgebildet ist.

4. Filtereinrichtung nach einem der Ansprüche 1 bis 3,
**dadurch gekennzeichnet,**
**dass** das Verschlusselement (12) aus schmierölbeständigem Kunststoff ausgebildet ist.

5. Filtereinrichtung nach einem der Ansprüche 1 bis 4,
**dadurch gekennzeichnet,**
**dass** die Verschlusseinrichtung (11), insbesondere an der Platte (63), eine in Axialrichtung offene Ringnut (49) aufweist, in welcher das Verschlusselement (12) angeordnet ist.

6. Filtereinrichtung nach einem der Ansprüche 1 bis 5,
**dadurch gekennzeichnet,**
**dass** das Zwischenstück (3) eine in Axialrichtung offene Ringnut (47) aufweist, in welcher ein Dichtelement (50) angeordnet ist, welches das Zwischenstück (3) im angeschraubten Zustand des Filtergehäusedeckels (2) gegenüber dem Gehäuse (4) abdichtet.

7. Filtereinrichtung nach Anspruch 1 und 6,
**dadurch gekennzeichnet,**
**dass** das Zwischenstück (3) die Ringnut (47) an der Kappe (37) aufweist.

8. Filtereinrichtung nach einem der Ansprüche 5 bis 7,
**dadurch gekennzeichnet,**
**dass** das Dichtelement (50) mit einem Abschnitt (43) axial in einen radialen Ringraum (64) zwischen Zwischenstück (3), insbesondere Kappe (37), und Gehäuse (4) hineinragt.

## Claims

1. Filter device (1), in particular an oil filter for cleaning lubricating oil for the internal combustion engines of motor vehicles,
- with a filter housing cover (2) delimiting a receiving chamber (5), in which filter housing cover a ring filter element (6) is arranged,
- with a housing (4), in which a mandrel (15) is arranged centrally, onto which the filter housing cover (2) is screwed,
- with at least one intermediate piece (3), which with the filter housing cover (2) screwed onto the housing (4), is arranged between the filter housing cover (2) and housing (4),
- with a housing-side inlet channel (7), which communicates with a dirty side of the ring filter element (6), and a housing-side outlet channel (8), which communicates with a clean side of the ring filter element (6),
- with a housing-side idling channel (9), through which the receiving chamber (5) can be emptied on removing the filter housing cover (2),
- wherein the intermediate piece (3) comprises a closure device (11) arranged to be rotatable about the filter axis (10), which closure device comprises a closure element (12) by means of which the idling channel (9) can be closed,
- wherein the closure device (11) is designed so that it is fixed in a precisely defined position when screwing the filter housing cover (2) onto the housing (4), in which position the closure element (12) is arranged aligned with the idling channel (9) and by screwing on the filter housing cover (2) can be adjusted into a position closing the idling channel (9), whereas the closure device (11) on unscrewing the filter housing cover (2) is rotated and at the same time is moved axially away from the housing (4) so that the closure element (12) releases the idling channel (9),
- wherein between the intermediate piece (3) and the ring filter element (6) a disc-like base (16) is provided, which comprises a plurality of through openings (33) distributed in circumferential direction,
**characterised in that**
- the intermediate piece (3) comprises a cap (37),
- the closure device (11) comprises a plate (63) mounted rotatably in the cap (37),
- the plate (63) comprises an opened side wall (21) with openings (40),
- between the plate (63) of the closure device (11) and the disc-like base (16) a spring element (17) is arranged which causes the closure element (12) to be pushed onto the idling opening (9),
- the closure device (11) or its plate (63) when screwing on the filter housing cover (2) engages with at least one rib (51), which is arranged on at least one side part (42) of the opened side wall (21) of the plate (63), on a ramp (18) of the cap (37) and can be adjusted by means of additionally screwing the filter housing cover (2) into its position closing the idling channel (9).

2. Filter device according to claim 1,
**characterised in that**
the rotational movement of the closure device (11) causes an axial adjustment of the closure device (11) and thus the opening of the idling channel (9).

3. Filter device according to claim 1 or 2,
**characterised in that**
a body comprising the closure element (12), in particular the plate (63), is made of plastic or metal, in particular sheet metal.

4. Filter device according to any one of claims 1 to 3,
**characterised in that**
the closure element (12) is made from a lubricating oil-resistant plastic material.

5. Filter device according to any one of claims 1 to 4,
**characterised in that**
the closure device (11), in particular on the plate (63), comprises an annular groove (49) which is open in axial direction in which the closure element (12) is arranged.

6. Filter device according to any one of claims 1 to 5,
**characterised in that**
the intermediate piece (3) comprises an annular groove (47) open in axial direction, in which a sealing element (50) is arranged, which seals the intermediate piece (3) from the housing (4) in the screwed on state of the filter housing cover (2).

7. Filter device according to claims 1 and 6
**characterised in that**
the intermediate piece (3) comprises the annular groove (47) on the cap (37).

8. Filter device according to any one of claims 5 to 7,
**characterised in that**
the sealing element (50) with one section (43) projects axially into a radial annular space (64) between the intermediate piece (3), in particular cap (37), and housing (4).

## Revendications

1. Dispositif de filtration (1), en particulier un filtre à huile servant à nettoyer de l'huile de lubrification pour des moteurs à combustion interne de véhicules automobiles,
- avec un couvercle de boîtier de filtre (2) délimitant un espace de réception (5), dans lequel un élément filtrant annulaire (6) est disposé,
- avec un boîtier (4), dans lequel un dôme (15) est disposé au centre et sur lequel le couvercle de boîtier de filtre (2) peut être vissé,
- avec au moins une pièce intermédiaire (3), qui est disposée à proximité du couvercle de boîtier de filtre (2) vissé au niveau du boîtier (4) entre le couvercle de boîtier de filtre (2) et le boîtier (4),
- avec un canal d'admission (7) situé côté boîtier, qui communique avec un côté brut de l'élément filtrant annulaire (6), et un canal d'évacuation (8) situé côté boîtier, qui communique avec un côté propre de l'élément filtrant annulaire (6),
- avec un canal de vidange (9) situé côté boîtier, par lequel l'espace de réception (5) peut être vidé lors du retrait du couvercle de boîtier de filtre (2),
- dans lequel la pièce intermédiaire (3) présente un dispositif de fermeture (11) disposé de manière à pouvoir tourner autour de l'axe de filtre (10), lequel présente un élément de fermeture (12), avec lequel le canal de vidange (9) peut être fermé,
- dans lequel le dispositif de fermeture (11) est réalisé de telle sorte qu'il est fixé, lors du vissage du couvercle de boîtier de filtre (2) au niveau du boîtier (4), dans une position précisément définie, dans laquelle l'élément de fermeture (12) est disposé de manière alignée par rapport au canal de vidange (9) et peut être ajusté, par le vissage du couvercle de boîtier de filtre (2), dans une position fermant le canal de vidange (9), tandis que le dispositif de fermeture (11) est tourné lors du dévissage du couvercle de boîtier de filtre (2) et est déplacé de manière simultanée axialement de manière à s'éloigner du boîtier (4) de sorte que l'élément de fermeture (12) dégage le canal de vidange (9),
- dans lequel est prévu, entre la pièce intermédiaire (3) et l'élément filtrant annulaire (6), un fond (16) de type disque, qui présente plusieurs ouvertures de passage (33) réparties dans la direction périphérique,
**caractérisé en ce**
- **que** la pièce intermédiaire (3) présente un capot (37),
- **que** le dispositif de fermeture (11) présente une plaque (63) montée de manière à pouvoir tourner dans le capot (37),
- **que** la plaque (63) présente une paroi latérale (21) percée avec des ouvertures (40),
- **qu'**est disposé, entre la plaque (63) du dispositif de fermeture (11) et le fond (16) de type disque, un élément de ressort (17), qui a pour effet que l'élément de fermeture (12) est poussé sur l'ouverture de vidange (9),
- **que** le dispositif de fermeture (11) ou sa plaque (63) s'engage, lors du vissage du couvercle de boîtier de filtre (2), par au moins une nervure (51), qui est disposée au niveau au moins d'une partie latérale (42) de la paroi latérale (21) percée de la plaque (63), au niveau d'une rampe (18) du capot (37) et peut être ajusté par un vissage ultérieur du couvercle de boîtier de filtre (2) dans sa position fermant le canal de vidange (9).

2. Dispositif de filtration selon la revendication 1,
**caractérisé en ce**
**que** le déplacement de rotation du dispositif de fermeture (11) a pour effet un ajustement axial du dispositif de fermeture (11), et ainsi, une ouverture du canal de vidange (9).

3. Dispositif de filtration selon la revendication 1 ou 2,
**caractérisé en ce**
**qu'**un corps présentant l'élément de fermeture (12), en particulier la plaque (63), est réalisé à partir de matière plastique ou de métal, en particulier de tôle.

4. Dispositif de filtration selon l'une quelconque des revendications 1 à 3,
**caractérisé en ce**
**que** l'élément de fermeture (12) est réalisé à partir d'une matière plastique résistante à l'huile de lubrification.

5. Dispositif de filtration selon l'une quelconque des revendications 1 à 4,
**caractérisé en ce**
**que** le dispositif de fermeture (11), en particulier au niveau de la plaque (63), présente une rainure annulaire (49) ouverte dans la direction axiale, dans laquelle l'élément de fermeture (12) est disposé.

6. Dispositif de filtration selon l'une quelconque des revendications 1 à 5,
**caractérisé en ce**
**que** la pièce intermédiaire (3) présente une rainure annulaire (47) ouverte dans la direction axiale, dans laquelle est disposé un élément d'étanchéité (50), qui étanchéifie par rapport au boîtier (4) la pièce intermédiaire (3) dans l'état vissé du couvercle de boîtier de filtre (2).

7. Dispositif de filtration selon la revendication 1 et 6,
**caractérisé en ce**
**que** la pièce intermédiaire (3) présente la rainure annulaire (47) au niveau du capot (37).

8. Dispositif de filtration selon l'une quelconque des revendications 5 à 7,
**caractérisé en ce**
**que** l'élément d'étanchéité (50) dépasse par une section (43) de manière axiale dans un espace annulaire (64) radial entre la pièce intermédiaire (3), en particulier le capot (37), et le boîtier (4).
